(19) **Europäisches Patentamt / European Patent Office / Office européen des brevets**

(11) **EP 1 775 980 B1**

(12) **EUROPEAN PATENT SPECIFICATION**

(45) Date of publication and mention
of the grant of the patent:
**21.04.2010 Bulletin 2010/16**

(51) Int Cl.:
*H04W 12/00* *(2009.01)*      *H04W 12/12* *(2009.01)*

(21) Application number: **05292162.4**

(22) Date of filing: **13.10.2005**

(54) **Method for determining if a handover procedure of a mobile terminal has to be executed**

Verfahren zur Bestimmung ob ein Weiterreichungsverfahren eines mobilen Terminals ausgeführt werden muss

Procédé pour déterminer si une procédé de transfert d'appel d'un terminal mobile doit être exécutée

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**18.04.2007 Bulletin 2007/16**

(73) Proprietors:
• **Mitsubishi Electric R&D Centre Europe B.V.**
**1119 NS Schiphol Rijk (NL)**
Designated Contracting States:
**FR**
• **MITSUBISHI DENKI KABUSHIKI KAISHA**
**Chiyoda-ku**
**Tokyo 100-8310 (JP)**
Designated Contracting States:
**AT BE BG CH CY CZ DE DK EE ES FI GB GR HU IE IS IT LI LT LU LV MC NL PL PT RO SE SI SK TR**

(72) Inventors:
• **Voyer, Nicolas c/o Mitsubishi Electric ITE**
**35708 Rennes Cedex 7 (FR)**
• **Lavillionniere, Eric c/o Mitsubishi Electric ITE**
**35708 Rennes Cedex 7 (FR)**
• **Pautonnier-Perrot, Sophie c/o Mitsubishi E. ITE**
**35708 Rennes Cedex 7 (FR)**

(74) Representative: **Maillet, Alain**
**Cabinet LE GUEN MAILLET**
**5, place Newquay**
**BP 70250**
**35802 Dinard Cedex (FR)**

(56) References cited:
**EP-A- 1 578 059      US-A1- 2003 235 163**
**US-B1- 6 577 868**

**Description**

The present invention relates generally to the field of the determination if a handover procedure of a mobile terminal has to be executed from a first base station which serves the mobile terminal to a second base station which is expected to serve the mobile terminal.

Current wireless cellular networks offer to mobile terminals the possibility to continue a communication with a distant telecommunication device even if the location of the mobile terminal within the wireless cellular network is changing. Classical wireless cellular networks are composed of plural base stations, each controlling one or several cell covering a given area. Each of the base stations are controlled and informed about communication parameters and so on by a centralized equipment. The centralized equipment of the wireless cellular network assumes the monitoring of items related to the communication for billing purpose or for collecting the information which are necessary for the communication continuation through different base stations. When a mobile terminal, which is in communication with a remote telecommunication device, moves from one cell controlled by a base station to another cell controlled by another base station, the centralized equipment transfers to the other base station all the information which are necessary for the continuation of the communication between the mobile terminal and the remote telecommunication device. Such wireless cellular networks are classically installed and managed by a mobile operator. The investments in terms of manpower, infrastructure, financial resources and time, as well as the capacity of the centralized equipment limit the mobile operator to expand the services offered by these wireless cellular networks.

Such limitation increase drastically if the cells cover a limited area of hundreds square meters, because the number of such cells, generally called micro cells, that should be operated by the mobile operator to cover an area of a given size is increased in comparison with the number of cells classically used. In other words, the classical centralized architecture of wireless cellular networks, managed by a single mobile operator is not adapted to micro cells networks.

Some Wireless Internet Service Providers (WISP) have started to provide to mobile terminals the possibility to access to Internet services through different wireless local area networks (WLAN) like, as example, WiFi local area network. WiFi local area networks are more and more adopted in the small office or home market. Compared with wireless cellular networks, such WLAN require much less investment in terms of manpower, infrastructure, financial resources. The multiplication of such wireless area networks creates some overlapping between the respective covering areas of neighbouring wireless local area networks.

Such overlapping of the covering areas creates a similar situation as the one created by the cells of a classical wireless cellular network.

The patent application US2003/235163 discloses a method for minimizing wireless packet delay. The mobile travels within a wireless communication network, is transferred to cells in order to maintain continuity of communication.

Up to now, it is difficult to realize some handover procedures of communications between such wireless local area networks as far as the base stations of these wireless local area networks have no means to get the necessary information for an efficient handover procedure.

The aim of the invention is therefore to propose methods, and devices which allow handover of a mobile terminal from a first base station which serves the mobile terminal to a second base station which is expected to serve the mobile terminal in a non centralized wireless network and more particularly when the base stations belong to different entities.

To that end, the present invention concerns a method according to claim 1.

The present invention concerns also a device according to claim 16.

Thus, the second base station is aware, prior to execute a handover procedure, about information related to items transferred between the mobile terminal and the telecommunication device. The second base station has then some information which enables it to forecast the content of the remaining communication which may go through it. The second base station can then avoid some possible congestion problems due to current tasks it has to do and the forecasted tasks to be executed once the handover will be executed.

According to a particular feature, the information related to items are obtained by the first base station from the mobile terminal and transferred by the first base station which serves the mobile terminal to the second base station.

Thus, there is no need of a centralized system which has to determine information related to items transferred between the mobile terminal and the telecommunication device.

Furthermore, as the communication between the mobile terminal can go through several base stations thanks to handover procedures, the mobile terminal is the best adapted device for determining information related to items from the beginning of the communication, the base stations being only temporary actors during the communication with the telecommunication device.

Also, the mobile terminal, which determines information related to items from the beginning of the communication, doesn't need to transfer information related to items to the second base station prior to establishing a communication link with the second base station. This transfer can be done before the handover is realised. Thus, it is not needed that the mobile terminal holds a dual receiver to communicate at the same time with the first base station for continuing the communication with the remote device, and with the second base station in order to transfer this information prior to realizing the handover.

According to a particular feature, the second base station further receives after the handover procedure, from the mobile terminal, information related to items transferred from the beginning of the communication between the mobile terminal and the telecommunication device

Thus, the second base station can check whether or not the information related to items received from the first base station are compatible with the information related to items received from the mobile terminal.

If the information are not compatible, it means that the mobile terminal or the first base station has transferred wrong information. If the first base station has transferred wrong information, the decision to execute a handover has been taken from unreliable information and may disturb the operation of the second base station. If the mobile terminal transfers wrong information, it means that the mobile terminal determination is inaccurate or falsified.

The second base station can then, in case of incompatibility of information related to items, stop the transfer of the communication.

Thus, the disturbance of operation of the second base station, which has accepted a handover of a communication from a first base station which provided inaccurate or falsified determination from a mobile terminal, can be limited in time.

According to a particular feature, the information related to items are the time elapsed between the first transferred item and the last transferred item and/or the quantity of items transferred from the beginning of the communication and/or the quality of service associated to the items and/or the type of items transferred from the beginning of the communication and/or the quantity of items that have not been transferred from the beginning of the communication.

Thus, being aware of time elapsed between the first transferred item and the last transferred item, the second base station is able to check whether or not the first base station or the mobile terminal tries to increase or reduce the time elapsed from the beginning of the communication. Such information is important when the communication is charged to the mobile terminal according to the duration of the communication. As far as the determination of information related to items is made by the mobile terminal, someone may tentatively try to reduce the duration of the communication. If the first or the second base stations charges the service provided to the mobile terminal or to the mobile operator of which the mobile terminal is client, the first base station may tentatively increase the duration of the communication in order to get extra payment.

Furthermore, being aware of information related to the time elapsed and the quantity of items transferred from the beginning of the communication and/or the quality of service associated to the items and/or the type of items transferred from the beginning of the communication and/or the quantity of items that have not been transferred from the beginning of the communication, the second base station can check if the forecasted content of the communication is in accordance with the information related to items or not and then decides whether or not it continues to authorize the communication to go through its resources.

According to a particular feature, the information related to items transferred between the mobile terminal and the telecommunication device are comprised in a certificate, the certificate further comprises the unique identifier of the mobile terminal, the unique identifier of the server of the mobile operator of which the mobile terminal is client, a timestamp, an identifier of the communication under process and a signature obtained by encoding the information, the identifiers, the timestamp by the private key of the mobile terminal or the private key of the server of the mobile operator of which the mobile terminal is client.

Thus, the second base station can check whether or not the received information are corrupted. If the first base station has modified the information related to items, it is possible, for the second base station, to detect it and then decide to stop any further handover with the first base station in order to save its processing resources for other tasks.

Furthermore, the operation of the second base station is not disturbed by requests of communication handover from a first base station which provided inaccurate or falsified determination from the mobile terminal.

Furthermore, the second base station is able to identify the mobile terminal or the server of the mobile operator of which, the mobile terminal is client. The second base station can then use these identifiers, together with the information related to items, to request some financial compensation for the service it is providing. The second base station can also inform the server of the mobile operator of which the mobile terminal is client, about the fact that the mobile terminal is in communication with the telecommunication device.

Furthermore, as far as the certificate comprises a timestamp, it is possible to order the certificates according to the value of the timestamp. In addition, it is possible to detect that one attempts to reuse an old certificate as a copycat, if it receives a certificate that includes a timestamp older than that of the last received certificate.

Furthermore, as the certificate comprises an identifier of the communication, it is no more possible to mix certificates related to different communications. Thus, the financial compensation can be differentiated on a per communication level.

Furthermore, if the signature is obtained using the private key of the server of the mobile operator of which the mobile terminal is client, the second base station has certified information from a third party which is nor the first base station nor the mobile terminal.

According to a particular feature, when the second base station stops to serve the mobile terminal, the second base station transfers to the server of the mobile operator of which the mobile terminal is client, a message comprising at least the last received certificate from the mobile terminal.

Thus, the server is able to determine the duration and/or the amount of items transferred in the part of the communication which goes through the second base station.

Furthermore, the server or the second base station can use the certificate for billing or compensation purpose. The determination of a bill is then reduced a lot and no longer needs any complex processing or dedicated devices. The mobile terminal determines information related to items transferred during the communication, the server or the second base station can then use it in order to evaluate the workload of the wireless cellular network or for other purposes as mentioned above.

According to still another aspect, the present invention concerns a method according to claim 7.

The present invention concerns also a device according to claim 17.

According to a particular feature, the first base station receives prior to the handover procedure, certificates from the mobile terminal, each certificate received from the mobile terminal comprising at least information related to items transferred from the beginning of the communication between the mobile terminal and the telecommunication device, a unique identifier of the mobile terminal, a unique identifier of the server of the mobile operator of which the mobile terminal is client, an identifier of the communication under process and a signature obtained by encoding at least the information and the identifiers by the private key of the mobile terminal.

Thus, the tasks of the first base station are simplified, the first base station needs only to transfer a certificate or certificates it has previously received from the mobile terminal to the second base station.

According to a particular feature, when the first base station stops to serve the mobile terminal, the base station transfers to the server of the mobile operator of which the mobile terminal is client, a message comprising at least the last received certificate from the mobile terminal or the first and last received certificate from the mobile terminal.

Thus, the server is able to determine the duration and/or the amount of items transferred in the part of the communication which goes through each of the base stations used by the mobile terminal.

Furthermore, the server or the base stations can use the certificate for billing purpose. The determination of a bill is then reduced a lot and doesn't need any complex processing or dedicated devices. The mobile terminal transfers information related to items transferred during the communication, the server or the base stations can then use it in order to evaluate the workload of the wireless cellular network or other purposes as mentioned above.

Furthermore, in order to get a compensation for the on-going communication, the first base station needs to store only the last received certificate, or the first and last certificate, for that communication. Intermediate certificates can be discarded. The size of the storage unit of the first base station can thus be minimised.

According to a particular feature, the first base station receives, in response to the message transferred to the server, a certificate from the server comprising a certified quantity of items, the unique identifier of the server, an identifier of the communication under process and a signature obtained by encoding at least the certified quantity of items and the identifiers by the private key of the server, the certified quantity of items being the quantity of items transferred between the mobile terminal and the telecommunication device through the first base station.

Thus, the first base station can use the certificate for billing purpose. The determination of a bill is then reduced a lot and doesn't need any complex processing or dedicated devices.

According to a particular feature, the certified quantity of items is calculated from information related to items comprised in the first received and last received certificates transferred to the server or from information related to items comprised in the last received certificates transferred to the server and information related to items comprised in a last received certificates transferred to the server by another base station which was previously serving the mobile terminal.

According to a particular feature, the first base station receives, in response to the information related to items transferred to the second base station, a certificate from the second base station, the certificate comprising at least the information related to items, the unique identifier of the second base station, an identifier of the communication under process and a signature obtained by encoding at least the information and the identifiers by the private key of the second base station.

According to a particular feature, the first base station transfers to the server of the mobile operator of which the mobile terminal is client, the certificate received from the second base station.

According to a particular feature, the first base station receives from the server of a mobile operator of which the mobile terminal is client a certificate authenticating the mobile terminal.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the methods and devices according to the invention, they will not be repeated here.

The present invention concerns also a signal according to claim 20.

Since the features and advantages relating to the signal are the same as those set out above related to the method and device according to the invention, they will not be repeated here.

The characteristics of the invention will emerge more clearly from a reading of the following description of an example embodiment, the said description being produced with reference to the accompanying drawings, among which :

Fig. 1 is a diagram representing the architecture of the wireless cellular network according to the present invention ;
Fig. 2 is a diagram representing the architecture of a server of a mobile operator according to the present invention ;
Fig. 3 is a diagram representing the architecture of a base station according to the present invention ;
Fig. 4 is an algorithm executed by a base station according to a first mode of realization of the present invention ;
Fig. 5 is an algorithm executed by a server according to the first mode of realization of the present invention ;
Fig. 6 is an algorithm executed by a server according to a second mode of realization of the present invention ;
Fig. 7 is an algorithm executed by a base station according to a third mode of realization of the present invention ;
Fig. 8 is an algorithm executed by a base station according to a fourth mode of realization of the present invention ;
Fig. 9 is an algorithm executed by a server according to the fourth mode of realization of the present invention.

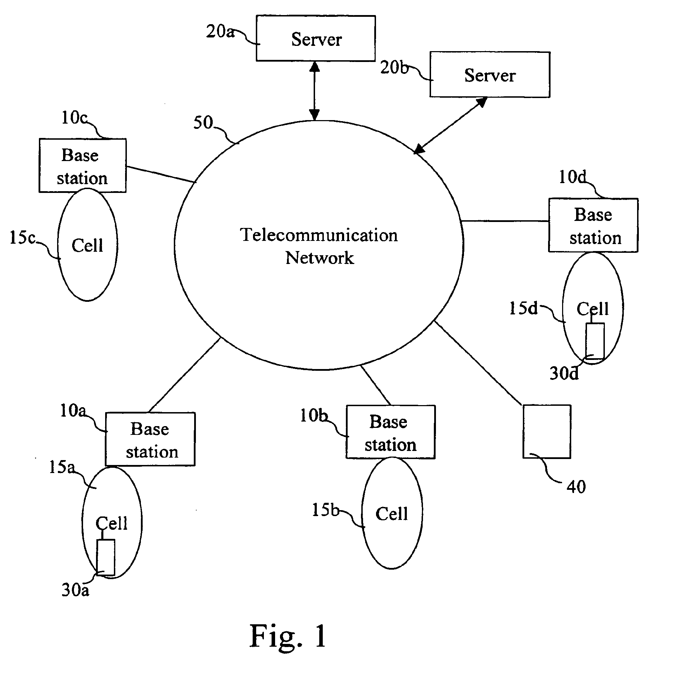

**Fig. 1** is a diagram representing the architecture of the wireless cellular network according to the present invention.

In the wireless cellular network of the Fig. 1, several base stations 10a, 10b, 10c and 10d are linked each other through a telecommunication network 50. The base stations 10a to 10d exchange information with servers 20a and 20b of mobile operators through the telecommunication network 50. The base stations 10a to 10d are the base stations 10 of a unique access network operator or are the base stations 10 of different access network operators.

An access network operator is an entity like a person of a company to which, at least a base station 10 belongs.

A mobile operator is en entity which offers to its clients communication services. The clients of a mobile operator pay the mobile operator in order to be allowed access to the services provided by the mobile operator.

According to the invention, items transferred during a communication, are as example and in a non limitative way, data which are transferred under the form of packets, datagram, or segments of a continuous flow.

A service provided by a mobile operator is, for instance and in a non limitative way, the establishment of a data communication session between the mobile terminal 30 and a remote telecommunication device 40 with a pre-negotiated quality of service, expressing requirements from the mobile terminal in terms of session duration, volume of data exchanged during the session, data rate used for the exchange of items or data, latency of packet data transmission, etc.

An access operator is able to charge either the users of the mobile terminals 30 or their mobile operator when the mobile terminals 30 are served by a base station 10 of the access operator.

The servers 20a and 20b are the servers of different mobile operators. Each server 20 memorizes the identifiers of the mobile terminals 30 of the clients of the mobile operator, and is able to determine the amount of money that each client has to pay according to its use of the mobile operator services. The servers 20a and 20b are able to certify information received from and/or transferred to a base station 10.

Each base station 10a to 10d is in charge of its respective cell 15a to 15d. As example, the base stations 10a to 10b are the base stations of wireless networks like, as example and in a non limitative way, WiFi local area networks.

A mobile terminal 30a or 30d which is located within the cell 15a or 15d can establish and/or receive some communications through the base station 10a or 10d which manages the cell 15a or 15d.

In the Fig. 1, only four base stations 10a to 10d are shown, but we can understand that a more important number of base stations 10 can be used in the present invention. In the Fig. 1, only one cell 15a, 15b, 15c and 15d is shown respectively for each of the base stations 10a, 10b, 10c and 10d, but we can understand that a more important number of cells 15 are managed by a base station 10 in the present invention.

A cell 15 may be defined as a set of geographical locations to which, a given base station 10 provides the best communication quality for the mobile terminals 30 comprised in that cell 15.

A base station 10 is serving a mobile terminal 30 if a communication is established between the mobile terminal 30 and a remote telecommunication device 40 through the base station 10.

In the Fig. 1, only two mobile terminals 30 are shown but we can understand that a more important number of mobile terminals 30 access to the service of the wireless cellular network in the present invention.

According to the invention, each mobile terminal 30 has means for determining information related to items transferred from the beginning of a communication with a remote telecommunication device 40 through the wireless cellular network. The means for determining information related to items are as example means for counting the quantity of items transferred from the beginning of the communication, means for memorizing the type of items transferred, means for determining the time when an item is transferred. The information related to items are as example and in a non limitative way, the time elapsed between the transfer of the first item and the last transferred item and/or the quantity of items transferred from the beginning of the communication and/or the quality of service associated to the items and/or the type of items transferred from the beginning of the communication and/or the quantity of items that have not been transferred from the beginning of the communication.

To each mobile terminal 30, it is associated a private and a public key. The mobile terminal 30 keeps its private key secret. Each server 20 of a mobile operator memorizes the public keys of the mobile terminals 30 which are clients of the mobile operator. Each server 20 delivers on demand the public keys to the base stations 10a to 10d. The private key of a mobile terminal 30 is used to generate a signature that protects the integrity of data contained in a certificate. A public key of a mobile terminal 30 allows a base station 10 to check if the information contained in a certificate generated with the private key of the mobile terminal 30 are corrupted or not.

More precisely, each mobile terminal 30, which is in communication, sends periodically information under the form of certificates. A certificate comprises the unique identifier of the mobile terminal 30, the unique identifier of the server 20 of its mobile operator, information related to items transferred from the beginning of the communication between the mobile terminal 30 and the telecommunication device 40, a timestamp, an identifier of the communication under process and a signature obtained by encoding at least the information, the identifiers by the private key of the mobile terminal 30. The public key can be used, together with the content of the certificate, to guarantee the integrity of the content of the certificate, and to authenticate the mobile terminal 30 as being the source of the certificate. The nature of private and public keys, the signature generation, the integrity detection, and the source authentication scheme can be taken, for instance, to comply with RSA authentication algorithm.

The telecommunication network 50 is as example and in a non limitative way, a dedicated wired network, or a public network like a public switched network or an IP based network or a wireless network or a combination of above cited networks.

The telecommunication network 50 connects the base stations 10, the remote telecommunication device 40 and the server 20 together and allows the transfer of messages between the base stations 10, between the base station 10 and the remote telecommunication device 40 and between the base stations 10 and the servers 20 according to the present invention.

In the present invention, each mobile terminal 30 determines, during each communication, information related to items transferred between the mobile terminal and the remote telecommunication device 40, transfers periodically, under the form of a certificate, information related to items transferred from the beginning of the communication in combination with other information, to the base station 10 which serves it.

A base station 10 which serves a mobile terminal 30 is a base station 10 through which a communication is established between the mobile terminal 30 and a remote telecommunication device 40 like another mobile terminal or a server, like a video on demand server or an SMS server...

The type of items transferred through such communication is related to the service provided by the remote telecommunication device 40 like synchronous services like a classical phone call or asynchronous services like the transfer of an SMS message or an image transfer or a transfer of a sequence of images.

The quality of service associated to the items is as example and in a non limitative way, the packet error rate which is determined by the mobile terminal 30 on items received.

At the end of a communication phase, for instance at the end of communication session between the mobile terminal 30 and the remote telecommunication device 40, or when a handover of the communication has to be made with another base station 10, the base station 10 which serves the mobile terminal 30 transfers at least the last received certificate from the mobile terminal 30 to the server 20 of the mobile operator of the mobile terminal 30 in order to get, from the mobile operator or from the user of the mobile terminal 30 a compensation, as example and in a non limitative way a sum of money, or a reduction of fees for being connected to the telecommunication network 50, in accordance to the service it has provided to the mobile operator and/or the user of the mobile terminal 30. In a similar way, the mobile operator uses the received certificates or certificate in order to charge the user of the mobile terminal 30.

Different entities contribute to the establishment of the wireless cellular network, each of the entities is able, thanks to the present invention, to get, according to their contribution in the wireless cellular network, reliable incomes from the communication established through the wireless area network.

The general principal of the present invention is that, when a mobile terminal 30 is served by a base station 10 and a handover of the mobile terminal 30 has to be executed from the base station 10 to another second base station 10, called hereinafter a base station 10 expected to serve the mobile terminal 30, the base station 10 expected to serve the mobile terminal 30 authorizes the handover only if it receives information related to items transferred from the beginning of the communication between the mobile terminal 30 and the remote telecommunication device 40. Such information are transferred, preferably and in a non limitative way, by the base station 10 which is currently serving the mobile terminal 30.

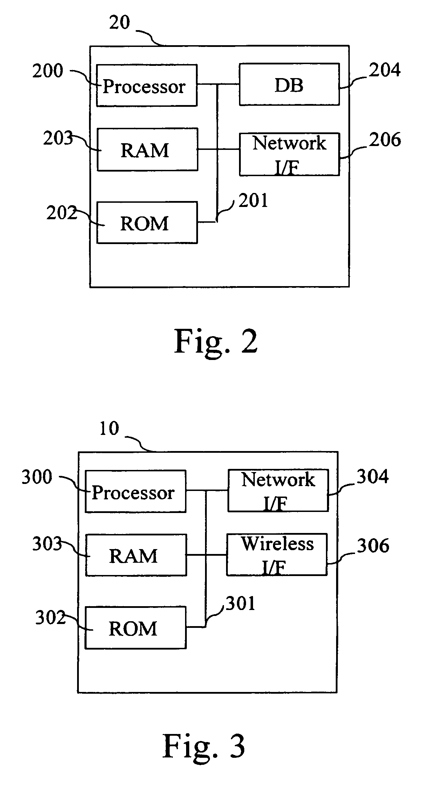

**Fig. 2** is a diagram representing the architecture of a server of a mobile operator according to the present invention.

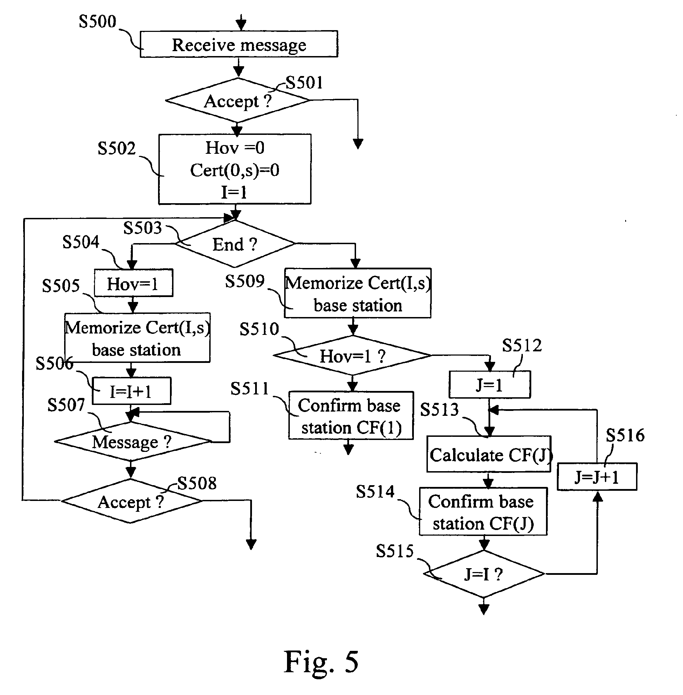

The server 20 has, for example, an architecture based on components connected together by a bus 201 and a processor 200 controlled by programs as disclosed in the Figs. 5, 6 and 9.

The bus 201 links the processor 200 to a read only memory ROM 202, a random access memory RAM 203, a telecommunication network interface 206 and a data base 204.

The memory 203 contains registers intended to receive variables and the instructions of the programs related to the algorithm as disclosed in the Figs. 5, 6 and 9.

The processor 200 executes the algorithm as disclosed in the Figs. 5, 6 and 9.

The read only memory 202 contains instructions of the programs related to the algorithm as disclosed in the Figs. 5, 6 and 9 which are transferred, when server 20 is powered on to the random access memory 203.

The server 20 is connected to the telecommunication network 50 through the network interface 206. As example, the network interface 206 is a DSL (Digital Subscriber Line) modem, or an ISDN (Integrated Services Digital Network) interface, or PLC (Power Line Communication) interface, or a wireless interface, etc. Through such interface, the server 20 exchanges messages with the base stations 10 as it will disclosed in reference to the Figs. 5, 6 and 9.

The database 204 comprises all information related to the mobile terminals 30 of the clients of the mobile operator the server 20 belongs to and information related to the services executed by the base stations 10. The database 204 comprises the public keys of the mobile terminals 30, and the certificates transferred by the base stations 10a to 10d that are related to the mobile terminals 30 of the clients of the mobile operator the server 20 belongs to.

**Fig. 3** is a diagram representing the architecture of a base station according to the present invention.

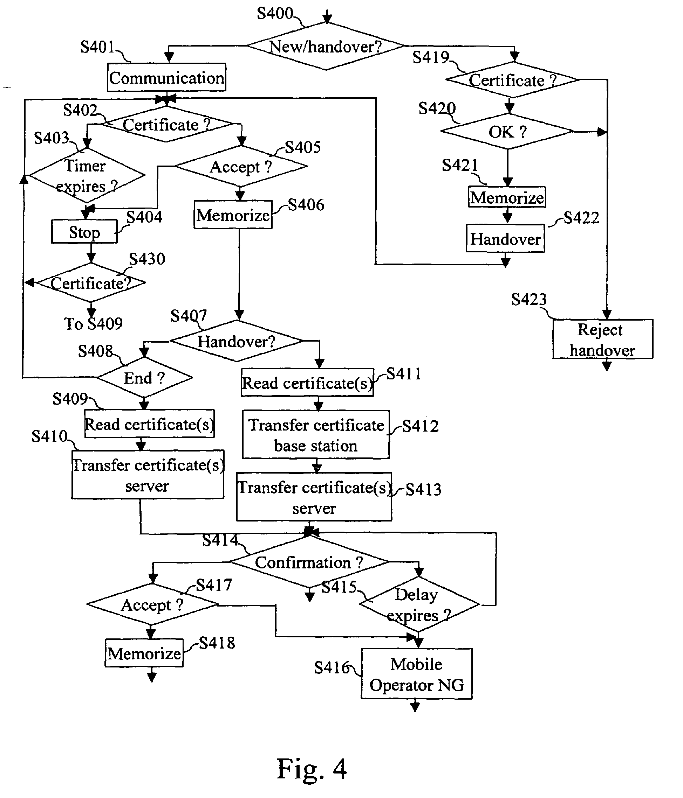

The base station 10 has, for example, an architecture based on components connected together by a bus 301 and a processor 300 controlled by programs as disclosed in the Figs. 4, 7 and 8.

The bus 301 links the processor 300 to a read only memory ROM 302, a random access memory RAM 303, a network interface 304 and a wireless interface 306.

The RAM memory 303 contains registers intended to receive variables, the certificates transferred by mobile terminals 30 or by other base stations 10 or by the server 20, the public keys of the mobile terminals 30 and of the server 20, a list of not reliable servers 20, a list of not reliable mobile terminals 30, a list of not reliable base stations 10 and the instructions of the programs related to the algorithms as disclosed in the Figs. 4, 7 and 8.

The processor 300 controls the operation of the network interface 304 and the wireless interface 306.

The read only memory 302, contains instructions of the programs related to the algorithms as disclosed in the Figs. 4, 7 and 8, which are transferred, when the base station 10 is powered on to the random access memory 303.

The base station 10 is connected to the telecommunication network 50 through the network interface 304. As example, the network interface 304 is a DSL (Digital Subscriber Line) modem, or an ISDN (Integrated Services Digital Network) interface, etc. Through such interface, the base station 10 exchanges information which the server 20 and the other base stations 10 of the wireless cellular telecommunication network. The communications with the remote telecommunication device 40 established or received by the mobile terminals 30 comprised in the cell 15 of the base station 10 go through the network interface 304 and the wireless interface 306.

Through the wireless interface 306, the base station 10 receives periodically from the mobile terminals 30 the base station 10 serves, the information related to items transferred from the beginning of the communication in combination of other information.

**Fig. 4** is an algorithm executed by a base station according to the present invention.

The present algorithm is executed each time a mobile terminal 30 comprised in the cell 15 of a base station 10 starts to establish a communication with a remote telecommunication device 40 through the base station 10 or receives a communication from a remote telecommunication device 40 through the base station 10 or when a handover procedure of a mobile terminal 30 served by the base station 10 occurs.

When a mobile terminal 30 comprised in the cell 15 of the base station 10 starts to establish a communication with a remote telecommunication device 40 shown in the Fig. 1, the base station 10 receives a message from the wireless interface 306.

When a mobile terminal 30 comprised in the cell 15 of the base station 10 receives a communication from a remote telecommunication device 40 or when a handover procedure occurs, the base station 10 receives a message from the network interface 304. Such message is, as example, sent by a server, not shown in the Fig. 1, of the wireless cellular network.

Such message comprises at least the identifier of the mobile terminal 30 and the identifier of the server 20 of the mobile operator of which, of the mobile terminal 30 is client or registered.

At step S400, the processor 300 of the base station 10 checks if the message is representative of a handover procedure or a new communication.

If the message is representative of a handover procedure, the processor 300 moves to step S419. If the message is representative of a new communication, wherein the identifier of the mobile terminal 30 is not contained in the list of not reliable mobile terminals 30 and the identifier of the server 20 of its mobile operator is not contained in the list of not reliable servers, the processor 300 moves to step S401. Otherwise, the processor 300 returns to step S400 in order to treat a subsequent message.

At step S401, the processor 300 establishes the communication between the mobile terminal 30 and the remote telecommunication device 40 through the wireless interface 306 and the network interface 304. At the same step, the processor 300 resets a timer associated to that communication and gets, if it doesn't have it, from the server 20 or from the mobile terminal 30, the public key of the mobile terminal 30, which is then stored in RAM 303.

At next step S402, the processor 300 checks whether or not it receives a certificate from the mobile terminal 30 which is served by the base station 10. The certificate comprises, as example and in a non limitative way, the unique identifier of the mobile terminal 30, the unique identifier of the server 20 of the mobile operator of which, the mobile terminal 30 is client, the information related to items transferred from the beginning of the communication between the mobile terminal 30 and the remote telecommunication device 40, a timestamp, an identifier of the communication under process and a signature.

If no certificate is received, the processor 300 moves to step S403. At step S403, the processor 300 checks whether or not the timer associated to the communication under process expires. If the timer is not expired, the processor 300 returns to step S402. If the timer is expired and no certificate is received from the mobile terminal 30 at step S402, the processor 300 moves to step S404 and stops the communication.

At next step S430, the processor 300 checks if the RAM memory 303 contains one certificate memorized during the communication under process. If a certificate is memorized, the processor 300 moves to step S409. Otherwise, the processor 300 returns to step S400 and waits for another message to process.

If a certificate is received from the mobile terminal 30, the processor 300 moves from step S402 to step S405.

At that step, the processor 300 checks if the received certificate is acceptable.

For that, the processor 300 decodes the signature with the public key of the mobile terminal 30 contained in RAM memory 303, and determines if the decoded information are identical to the one comprised in the certificate. If information are different, the certificate is corrupted, the processor 300 moves then to step S404 and stops the process of the communication. The processor 300 checks also if the identifier of the server 20 of the mobile operator is one of the identifiers considered as not reliable. If the identifier of the server 20 is not reliable, the processor 300 moves to step S404 and stops the communication. If the information related to items transferred from the beginning of the communication or the timestamp comprised in the certificate is not compatible with the information related to items transferred from the beginning of the communication or the timestamp comprised in a previously received certificate from the mobile terminal 30, the processor moves to step S404 and stops the communication. If the information related to items transferred from the beginning of the communication comprised in the certificate are not compatible with, i.e. lower than, the information related to items transferred from the beginning of the communication memorized at step S421 which will be disclosed latter on, the processor 300 moves to step S404 and stops the communication.

If the certificate is acceptable, the processor 300 moves to step S406 and memorizes the received certificate in the RAM memory 303.

At the following step S407, the processor 300 checks whether or not a handover is requested or needed for the mobile terminal 30. If no handover is requested or needed, the processor 300 moves to step S408. If a handover is requested or needed, the processor 300 moves to step S411.

At step S408, the processor 300 checks whether or not the communication is released. If the communication is not released, the processor 300 returns to step S402 and waits for another certificate. If the communication is released, the processor 300 moves to step S409 and reads, from the RAM memory 303, the last memorized certificate.

In a variant of realization, the processor 300 also reads at step S409 the first certificate received from the mobile terminal 30 of the communication under process.

At next step S410, the processor 300 transfers a message comprising the read certificate or certificates to the server 20 with an information which indicates that the communication ends. At the same step, the processor 300 resets a timer associated to that transfer. The processor 300 moves then to step S414.

If at step S407, it is determined that a handover is requested or needed, the processor 300 moves to step S411.

At that step, the processor 300 reads from the RAM memory 303 the last memorized certificate.

In the variant of realization, the processor 300 reads also the first certificate received from the mobile terminal 30 of the communication under process.

At next step S412, the processor 300 transfers at least the information, comprised in the last received certificate, which are related to items transferred from the beginning of the communication between the mobile terminal 30 and the remote telecommunication device 40. Preferably, the processor 300 transfers the last received certificate to the base station 10 which is expected to serve the mobile terminal 30. The processor 300 moves then to step S413.

At step S413, the processor 300 transfers a message comprising, the read certificate or certificates to the server 20 of the mobile operator of which, the mobile terminal 30 is client, and an information indicating that a handover is expected to be executed. At the same step, the processor 300 resets a timer associated to that transfer. The processor 300 moves then to step S414.

At step S414, the processor 300 checks whether or not it receives from the network interface 304 a confirmation message from that server 20, in response to the message sent at step S410 or S413.

Such confirmation is as example, a certificate which comprises the unique identifier of the mobile terminal 30, the unique identifier of the server 20, a certified quantity of items transferred between the mobile terminal 30 and the remote telecommunication device 40, a timestamp, the identifier of the communication under process and a signature obtained by encoding at least the certified quantity of items and the identifiers by the private key of the server 20. The confirmation message includes also, if necessary, the public key of the server 20. The confirmation message is, in a variant of realization a message, which acknowledges the certificate or certificates sent at step S410 or S413.

If no confirmation message is received, the processor 300 moves to step S415.

At that step, the processor 300 checks whether or not the timer associated to the transfer expires. If the timer is not expired, the processor 300 returns to step S414. If the timer expires and no confirmation message is received from the server 20, the processor 300 moves to step S416.

At that step, the processor 300 adds the identifier of the server 20 in the list of not reliable servers 20 in the RAM memory 303. It has to be noted here that, prior to add the identifier of the server 20 in the list of not reliable servers 20, the base station 10 sends some warning message to the server 20 informing it that if it doesn't send a confirmation message within a predetermined delay, its identifier will be included in the list of not reliable servers 20.

In a variant of realization, the identifier of the mobile terminal 30 is added in a list of not reliable mobile terminals 30 in the RAM memory 303.

If at step S414, a confirmation message is received from the server 20 the processor 300 moves from step S414 to step S417.

At that step, the processor 300 checks if the confirmation message is acceptable.

If the confirmation message is a certificate, the processor 300 decodes the signature with the public key of the server 20 and determines if the decoded information are identical to the one comprised in the certificate. If information are different, the certificate is corrupted, the processor 300 moves then to step S416. If decoded information which comprise at least a certified quantity of items is not compatible with the information related to items transferred from the beginning of the communication comprised in the certificate or certificates transferred at step S410 or S413, the processor 300 moves to step S416.

It the certificate is acceptable, the processor 300 moves to step S418.

If the confirmation message is an acknowledgment, the processor 300 moves directly from step S417 to step S418.

At that step, the processor 300 memorizes the confirmation message. Such message is then used, for billing the mobile operator and/or the user of the mobile terminal 30.

If at step S400 the processor 300 of the base station 10 determines that the message is representative of a handover procedure, the base station 10 is considered as a base station 10 which is expected to serve a mobile 30 currently being served by another base station 10. The processor 300 thus moves from step S400 to step S419.

At that step, the processor 300 checks whether or not it has received, information related to items transferred from the beginning of the communication between the mobile terminal 30 and the remote telecommunication device 40.

Such information are, as example, comprised in a certificate transferred by the base station 10 which is currently serving the mobile terminal 30.

If no information related to items is received, the processor 300 moves to step S423 and rejects the handover procedure and then refuse to serve the mobile terminal 30.

In a preferred embodiment, the processor 300 adds the base station 10 serving the mobile terminal 30 in the list of not reliable base stations 10 in the RAM memory 303.

If information related to items transferred from the beginning of the communication between the mobile terminal and the remote telecommunication device are received, the processor 300 moves to step S420.

At that step the processor 300 checks whether or not it can accept the handover.

For that, the processor 300, using the information related to items transferred between the mobile terminal 30 and the remote telecommunication device 40, forecasts the content of the communication which may go through the base station 10, determines if the forecasted content of the communication needs important processing resources or determines the expected bandwidth for the communication in the telecommunication network 50 and checks whether or not it can take in charge the communication.

If the information related to items transferred between the mobile terminal 30 and the remote telecommunication device 40 are the time elapsed from the transfer of the first item and the last item from the beginning of the communication and/or the quantity of items transferred from the beginning of the communication and/or the quality of service associated to the communication, the processor 300 uses these information in order to determine an expected bandwidth for the communication and checks if it is compatible with the bandwidth used by other communications. If the information related to items transferred between the mobile terminal 30 and the remote telecommunication device 40 are the type of items transferred from the beginning of the communication, the processor 300 evaluates the bandwidth and the processing resource it has to allow to the communication and checks if they are compatible with its currents tasks.

If the information related to items transferred between the mobile terminal 30 and the remote telecommunication device 40 are the quantity of data that have not been transferred from the beginning of the communication, the processor 300 deduces that it may have to manage some retransmission of items and then checks if it has enough memory for these retransmission.

If the base station 10 who sent the message is included in the list of not reliable base stations 10, the processor 300 decides not to accept the handover.

If the processor 300 determines that the base station 10 can take in charge the communication, the processor 300 moves to step S421, otherwise, the processor 300 moves to step S423.

At next step 5421 the processor 300 memorizes the certificate.

At next step S422, the processor 300 executes the handover procedure, serves the mobile terminal 30 and moves to step S402 already described.

**Fig. 5** is an algorithm executed by a server according to the first mode of realization of the present invention.

In that first mode of realization, the server 20 sends the confirmation message to each of the base stations which have served a mobile terminal 30 during a communication with a remote telecommunication device.

The present algorithm is executed by the processor 200 of each server 20.

At step S500, the processor 200 detects the reception of a message comprising one or two certificates through the network interface 206 and an information which indicates if a communication ends of if a handover procedure is going on. Such certificate or certificates are as the one (s) transferred by a base station 10 at step S413 or step S410 of the Fig. 4.

At next step S501, the processor 200 checks if the received certificate or certificates is or are acceptable.

For that, and for each received certificate, the processor 200 decodes the signature with the public key of the mobile terminal 30 which originates the certificate and determines if the decoded information are identical to the one comprised in the certificate. If at least one information is different, the message is corrupted, the processor 200 stops the present algorithm for the communication under process. The processor 200 checks also if the identifier of the mobile terminal 30 is the identifier of one of its clients. If the identifier of the mobile terminal 30 is not one of its clients, the processor 200 stops the present algorithm for the communication under process. If the certificate is acceptable, the processor 200 moves to step S502.

At step S502, the processor 200 resets the variables associated to the communication between the mobile terminal 30 and the remote telecommunication device 40 noted Hov, Cert(0,s) where s is equal to one or two and sets the variable I to one.

At next step S503, the processor 200 determines if the message comprises an information of an end of communication or a handover. If the message comprises an information of an end of communication, the processor 200 moves to step S509. If the message comprises an information of a handover, the processor 200 moves to step S504.

At step S504, the processor 200 sets the variable Hov to one.

At next step S505, the processor 200 memorizes the received certificate in the database 204, sets the content of variable Cert(I,2) to the information related to items transferred from the beginning of the communication between the mobile terminal 30 and the remote telecommunication device 40 which is comprised in the received message. The information related to items transferred from the beginning of the communication between the mobile terminal 30 and the remote telecommunication device 40 is the time elapsed between the transfer of a first item and the transfer of the last item sent prior the transfer of that message or is the quantity of items transferred during the communication prior the transfer, of that message.

According to the variant of realization, two certificates are comprised in the received message. The processor 200 memorizes those two certificates into the database 204. The information related to items transferred from the beginning of the communication between the mobile terminal and the remote telecommunication device 40 comprised in the received certificate which has the older timestamp is memorized under the variable Cert(I,1), the other one under the variable Cert(I,2).

At next step S506, the processor 200 increments the variable I of one.

At next step S507, the processor 200 checks whether or not at least a message comprising at least one certificate is received from a base station 10. As far as no message is received, the processor 200 executes the loop constituted by the step S507. If a message is received, the processor 200 moves to step S508.

It has to be noted here that if no message is received during a predetermined time duration, the processor 200 stops the present algorithm and returns to step S500.

At step S508, the processor 200 checks if each certificate comprised in the message is acceptable.

The processor 200 executes similar operations as the one disclosed in reference to the step S501 and executes further check. As example, the processor 200 checks if the information related to items transferred between the mobile terminal 30 and the remote telecommunication device 40 comprised in each certificate are compatible with the one received in former certificates, i.e. if the information related to items transferred between the mobile terminal 30 and the remote telecommunication device 40 are not below the one comprised in previous certificates.

If one received certificate is not acceptable, the processor 200 stops the present algorithm.

If each of the certificates comprised in the message is acceptable, the processor 200 returns to step S503.

If the processor 200 determines at step S503 that the message comprises an indication of an end of communication, the processor 200 moves from step S503 to step S509.

At that step, the processor 200 memorizes the received certificate comprised in the received message into the database 204, sets the content of variable Cert(I,2) to the information related to items transferred from the beginning of the communication between the mobile terminal 30 and the remote telecommunication device 40 comprised in the received message and memorizes the identifier of the base station 10 which sent the message.

According to the variant of realization, two certificates are comprised in the received message. The processor 200 memorizes those two certificates into the database 204. The information related to items comprised in the received message which has the older timestamp is memorized under the variable Cert(I,1), the other one under the variable Cert(I,2).

At next step S510, the processor 200 checks whether or not the variable Hov is equal to one. Such variable indicates that at least one handover has been executed.

If Hov is equal to zero, the processor 200 moves to step S511 and transfers to the base station 10 which sent the received message, a confirmation message which indicates that the message has been treated.

Such confirmation is as example, a certificate which comprises the unique identifier of the mobile terminal 30, the unique identifier of the server 20, a certified quantity of items transferred between the mobile terminal 30 and the remote telecommunication device 40, i.e. the information related to items transferred between the mobile terminal 30 and the remote telecommunication device 40 comprised in the received message having the most recent timestamp, a timestamp, an identifier of the communication under process under process and a signature obtained by encoding at least the certified quantity of items, the identifiers by the private key of the server 20.

The certified quantity of items is the quantity of items transferred between the mobile terminal 30 and the telecommunication device 40 through the base station 10.

The processor 200 stops then the present algorithm for the communication under process.

If Hov is equal to one, the processor 200 moves to step S512 and sets a variable noted J to one.

The processor 200 then moves to step S513 and calculates a quantity of items transferred between the mobile terminal 30 and the remote telecommunication device 40 CP(J)=Cert(J,2)-Cert(J-1,2).

According to the variant of realization of the present invention, when two certificates are comprised in the received message, CF(J)=Cert(J,2)-Cert(J,1).

At next step S514, the processor 200 transfers to the base station 10 which sent the J-th received message, a confirmation message which indicates that the message has been treated.

Such confirmation is as example, a certificate which comprises the unique identifier of the mobile terminal 30, the unique identifier of the server 20, the certified quantity of items CF(J), a timestamp, an identifier of the communication under process and a signature obtained by encoding at least the certified quantity of items, the identifiers by the private key of the server 20.

The certified quantity of items is the quantity of items transferred through the base station 10 which sent the J-th received message between the mobile terminal 30 and the telecommunication device 40.

At next step S515, the processor 200 checks whether or not the variable J is equal to the variable I. If they are identical the processor 200 stops the present algorithm for the communication under process. If they are different, the processor 200 moves to step S516, increments the variable J of one and returns to step S513.

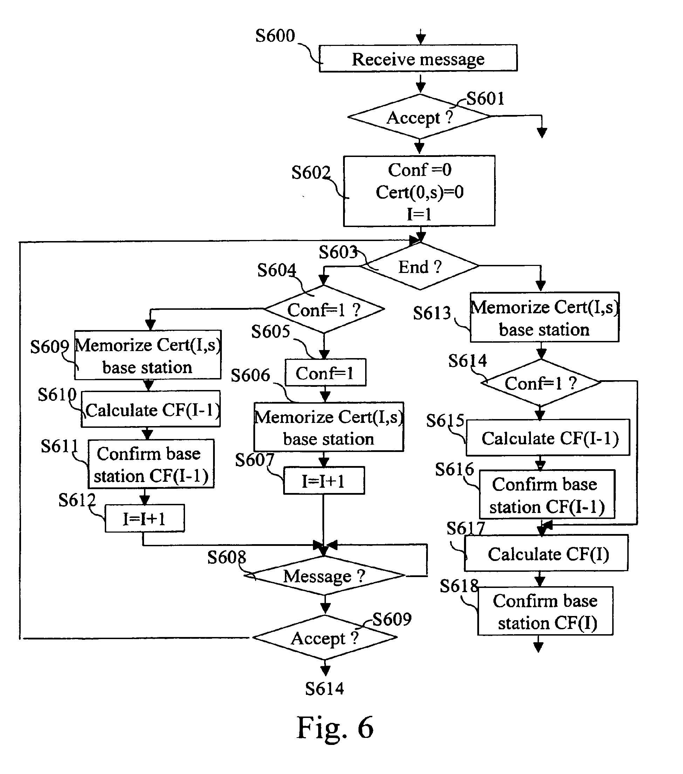

Fig. 6 is an algorithm executed by a server according to a second mode of realization of the present invention.

In that second mode of realization, the server 20 sends a confirmation message to a base station 10 which has served a mobile terminal 30 for a communication prior to a handover procedure, once the base station 10 which serves the mobile terminal 30 after the handover procedure has sent a message comprising at least two certificates to the server 20.

The present algorithm is executed by the processor 200 of each server 20.

At step S600, the processor 200 detects the reception through the network interface 206 of a message comprising two certificates through the network interface 206 and an information which indicates if a communication ends or if a handover procedure is going on. Such certificates are as the one transferred, according to the variant of realization, by a base station 10 at step S413 or S41 0 of the Fig. 4.

At next step S601, the processor 200 checks if the received certificates are acceptable.

For that and for each received certificate, the processor 200 decodes the signature with the public key of the mobile terminal 30 which originates the certificates and determines if the decoded information are identical to the one comprised in the certificate. If information are different, the message is corrupted, the processor 200 stops the present algorithm for the communication under process. The processor 200 checks also if the identifier of the mobile terminal 30 is the identifier of one of the clients of its mobile operator. If the identifier of the mobile terminal 30 is not one of the clients, the processor 200 stops the present algorithm for the communication under process. If the certificates are acceptable, the processor 200 moves to step S602.

At step S602, the processor 200 resets the variable associated to the communication between the mobile terminal 30 and the remote telecommunication device 40 noted Conf, Cert(0,s) where s is equal to one or two and sets the variable I to one.

At next step S603, the processor 200 determines if the message comprises an indication of an end of communication or a handover. If the message comprises an indication of an end of communication, the processor 200 moves to step S613. If the message comprises an indication of a handover, the processor 200 moves to step S604.

At step S604, the processor 200 checks if the variable Conf is equal to one. The variable Conf is representative of the need to transfer a confirmation message to a base station 10. If the variable Conf is equal to one, the processor 200 moves to step S609. If the variable Conf is null, the processor 200 moves to step S605.

At step S605, the processor 200 sets the variable Conf to one.

At next step S606, the processor 200 memorizes the received certificates, the information related to items comprised in the received certificate which has the older timestamp is memorized under the variable Cert(I,1), the information related to items comprised in the other certificate under the variable Cert(I,2).

The information related to items transferred from the beginning of the communication between the mobile terminal 30 and the remote telecommunication device 40 is the time elapsed between the transfer of a first item and the transfer of the last item sent prior the transfer of that message or is the quantity of items transferred during the communication prior the transfer, of that message.

At next step S607, the processor 200 increments the variable I of one.

At next step S608, the processor 200 checks whether or not another message comprising two certificates is received for the communication between the mobile terminal 30 and the remote telecommunication device 40. As far as no message is received, the processor 200 executes the loop constituted by the step S608.

It has to be noted here that if no message is received during a predetermined time duration, the processor 200 stops the present algorithm and returns to step S500.

If a message is received, the processor 200 moves to step S609.

At step S609, the processor 200 checks if the certificates comprised in the received message are acceptable.

The processor 200 executes similar operations as the one disclosed in reference to the step S601 and executes further check.

If one received certificate is not acceptable, the processor 200 discards the certificates and moves to step S614.

If the received certificates are acceptable, the processor 200 returns to step S603.

If the processor 200 determines at step S604 that the variable Conf is equal to one, the processor 200 moves from step S604 to step S609.

At that step, the processor 200 memorizes the certificates comprised in the received message, sets the information related to items comprised in the certificate which has the older timestamp under the variable Cert(I,1), and the information related to items comprised in the other certificate under the variable Cert(I,2).

At next step S610, the processor 200 calculates a certified quantity of items transferred between the mobile terminal 30 and the remote telecommunication device 40 CF(I-1) which is equal to :

$$CF(I-1) = (\,Min\,(\,Cert(\,I-1,2\,)\;Cert(\,I,1\,)\,)\,) - Cert(\,I-1,1\,).$$

At next step S611, the processor 200 transfers, to the base station 10 which sent the (I-1)-th received message, a confirmation message which indicates that the message has been treated.

Such confirmation is as example, a certificate which comprises the unique identifier of the mobile terminal 30, the unique identifier of the server 20, the certified quantity of items CF(I-1), a timestamp, the identifier of the communication under process and a signature obtained by encoding at least the certified quantity of items, the identifiers by the private key of the server 20.

CF(I-1) is the certified quantity of items transferred through the base station 10 which sent the (I-1)-th received message between the mobile terminal 30 and the telecommunication device 40.

At next step S612, the processor 200 increments the variable I of one and moves to step S608 already described.

If at step S603, the processor 200 determines that the message comprises an indication of an end of communication, the processor 200 moves from step S603 to step S613.

At that step, the processor 200 memorises the certificates comprised in the received message, sets information related to items comprised in the received certificate which has the older timestamp under the variable Cert(I,1), and the information related to items comprised in the other certificate under the variable Cert(I,2).

At next step S614, the processor 200 checks if the variable Conf is equal to one. If the variable Conf is not equal to one, the processor 200 moves to step S617, otherwise the processor 200 moves to step S615.

At step S615, the processor 200 calculates a quantity of items transferred between the mobile terminal 30 and the remote telecommunication device 40 CF(I-1) which is equal to :

$$CF(I\text{-}1)= ( \text{Min} ( \text{Cert}( I\text{-}1, 2 )\, \text{Cert}( I,1 ) ) )\text{-}\text{Cert}( I\text{-}1,1 ).$$

At next step S616, the processor 200 transfers, to the base station 10 which sent the (I-1)-th received message, a confirmation message which indicates that the message has been treated.

Such confirmation message is as example, a certificate which comprises the unique identifier of the mobile terminal 30, the unique identifier of the server 20, the certified quantity of items CF(I-1), a timestamp, the identifier of the communication under process and a signature obtained by encoding at least the certified quantity of items, the identifiers by the private key of the server 20.

CF(I-1) is the certified quantity of items transferred through the base station 10 which sent the (I-1)-th received message between the mobile terminal 30 and the telecommunication device 40.

At step S617, the processor 200 calculates a certified quantity of items transferred between the mobile terminal 30 and the remote telecommunication device 40 CF(I) which is equal to :

$$CF(I)= \text{Cert}(I, 2)\text{-}\text{Cert}(I,1).$$

At next step S618, the processor 200 transfers to the base station 10 which sent the I-th received message a confirmation message which indicates that the message has been treated.

Such confirmation is as example, a certificate which comprises the unique identifier of the mobile terminal 30, the unique identifier of the server 20, the certified quantity of items CF(I), a timestamp, an identifier of the communication under process and a signature obtained by encoding at least the certified quantity of items, the identifiers by the private key of the server 20.

CF(I) is the certified quantity of items transferred through the base station 10 which sent the (I)-th received message between the mobile terminal 30 and the telecommunication device 40.

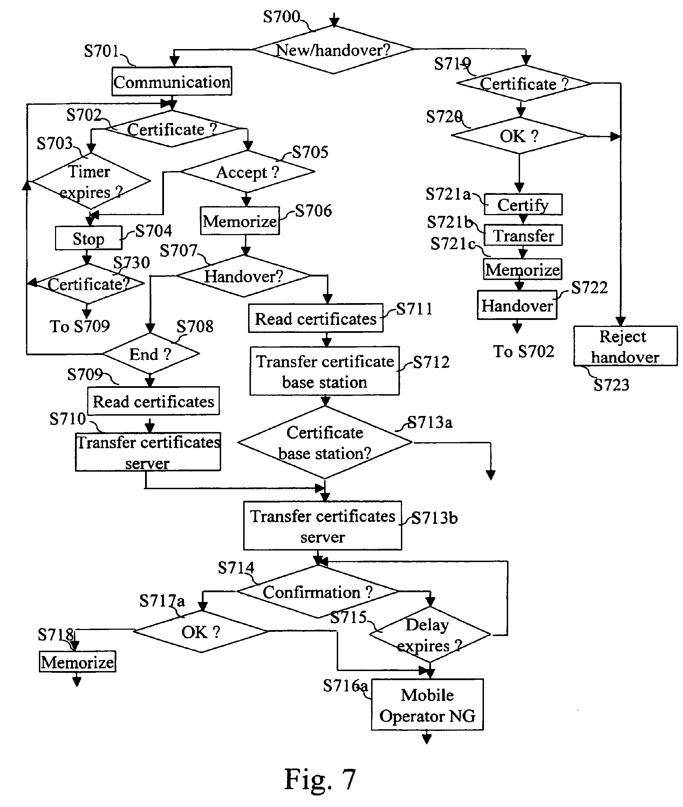

**Fig. 7** is an algorithm executed by a base station according to a third mode of realization of the present invention.

The basic concept of that mode of realisation is that, when a handover occurs between two base stations 10, the base station 10 which is currently serving the mobile terminal 30, sends the last received certificate from the mobile terminal 30 to the other base station 10 which is expected to serve the mobile terminal 30. The other base station 10 using its own private key, forms a message comprising its signature, the information comprised in the received certificate, its unique identifier and transfers it to the base station 10 which is currently serving the mobile terminal 30.

The base station 10 which is currently serving the mobile terminal 30 forms a message comprising the first received certificate from the mobile terminal 30 and the certificate received by the base station 10 expected to serve the mobile terminal 30 to the server 20 of which, the mobile terminal 30 is client.

The algorithm of the Fig. 7 differs from the algorithm of the Fig. 4 in the sense that the step S421 is replaced by the steps S721a to S721c, the step S413 of the Fig. 4 is replaced by the steps S713a and S713b. Only these steps will be disclosed hereinafter, the other steps of the algorithm of the Fig. 7 being identical to the ones of the Fig. 4.

At step S721a, the processor 300 certifies the information comprised in certificate analysed at step S719, by encoding using its own private key a signature that protects the integrity of information contained in the certificate received at step 719 and of its own unique identifier.

At step S721b, the processor 300 forms a message comprising a signature, the information comprised in the certificate received at step S719 and its own unique identifier.

At step S721c, the processor 300 transfers the formed message to the base station 10 which sent the certificate checked at step S719, prior to moving to step S722.

At step S713a, the processor 300 checks whether or not it receives a message as the one disclosed at step S721 b.

If no message is received, the processor 300 stops the handover procedure as far as the other base station 10 concerned in the handover procedure is considered as not reliable, and continues the communication between the mobile terminal 30 and the remote telecommunication device 40.

If a message is received, the processor 300 moves to step S713b and transfers the received message in combination with the first received certificate from the mobile 30 to the server 20 of which, the mobile terminal 30 is client.

It has to be noted here that the server 20 uses the certificate as disclosed in the step S721b as it is the last received certificate from the mobile terminal 30.

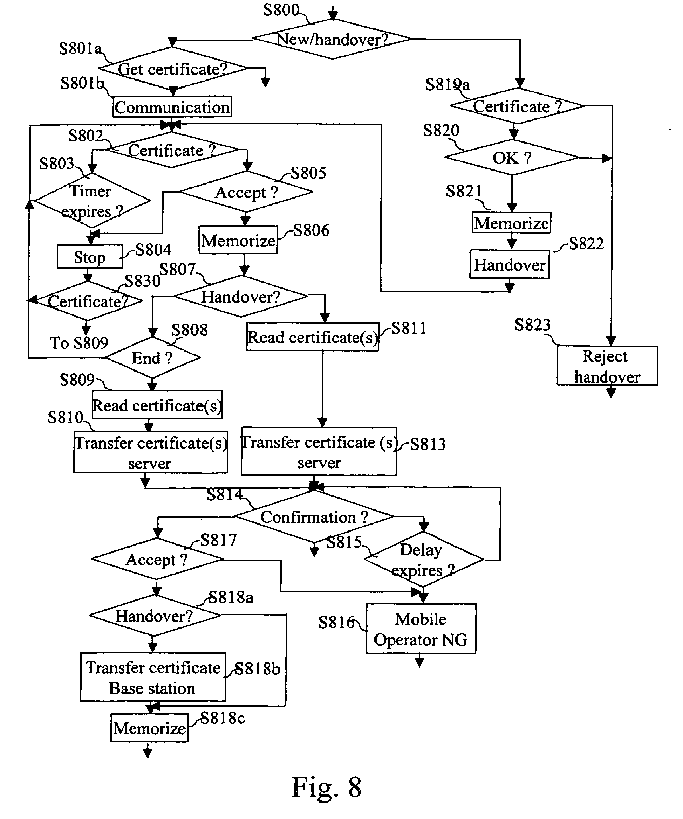

**Fig. 8** is an algorithm executed by a base station according to a fourth mode of realisation of the present invention.

The basic concept of that mode of realization is that, when a communication is intended to be setup with a mobile terminal 30, the base station 10 that may serve the mobile terminal 30 sends a message to the server 20 in order to get a certificate authenticating that the mobile terminal 30 is a client of the mobile operator.

When a handover occurs between two base stations 10, the base station 10 which is currently serving the mobile terminal 30, sends a message comprising the last received certificate from the mobile terminal 30 to the server 20. The server 20 transfers in response a confirmation comprising a certificate authenticating the mobile terminal 30 to the base station 10 currently serving the mobile terminal 30. The base station 10 which is currently serving the mobile terminal 30 transfers the certificate received from the server 20 to the base station 10 which is expected to serve the mobile terminal 30.

The algorithm of the Fig. 8 differs from the algorithm of the Fig. 4 in the sense that the step S401 is replaced by the steps S801a and S801b, the step S419 of the Fig. 4 is replaced by the step S819a, the step S412 of the Fig. 4 is suppressed and the step S418 of the Fig. 4 is replaced by the steps S818a to S818c. Only these steps will be disclosed hereinafter, the other steps of the Fig. 8 being identical to the ones of the Fig. 4.

At step S801a, the processor 300 transfers a message to the server 20 of the mobile terminal 30 inquiring from the server 20 a certificate which authenticates the mobile terminal 30. For that, the processor 300 sends a message to the server 20 which comprises the unique identifier of the mobile terminal 30 for which, a communication is intended to be setup. Such message is preferably a certificate which comprises the unique identifier of the mobile 30, the unique identifier of the base station 10, the unique identifier of the server 20, an indication of start of service and a signature made by encoding the above mentioned identifiers by the private key of the server 20. If no certificate is received, the processor 300 stops the present algorithm and communication between mobile terminal 30 and the remote telecommunication device 40 will not be established.

Once such certificate is received, the processor 300 moves to step S801b, establishes the communication between the mobile terminal 30 and the remote telecommunication device 40 through the wireless interface 306 and the network interface 304. At the same step, the processor 300 resets a timer associated to that communication and gets from the server 20 or from the mobile terminal 10, the public key of the mobile terminal 30, which is stored in RAM 303.

At step S818a, the processor 300 checks if a handover procedure was requested or not at step S807. If a handover procedure was requested at step S807, the processor 300 moves to step S818b and transfers to the other base station 10 which is expected to serve the mobile terminal 30, the certificate comprised in the confirmation message received from the server 20.

At next S818c the processor 300 memorizes the certificate comprised in the confirmation message. Such message can then be used, as example, for billing the mobile operator or the user of the mobile terminal 30.

At step S819a, the processor 300 checks whether or not it has received, information related to items transferred from the beginning of the communication between the mobile terminal and the remote telecommunication device 40.

Such information is, as example a certificate as transferred in the step S818b by the base station 10 which is currently serving the mobile terminal 30.

At step S820, the processor 300 decodes the signature with the public key of the server 20 and determines if the decoded information are identical to the one comprised in the certificate. If information are different, the message is corrupted, the processor adds the base station 10 which sent the message in the list of unreliable base station and moves to step S823.

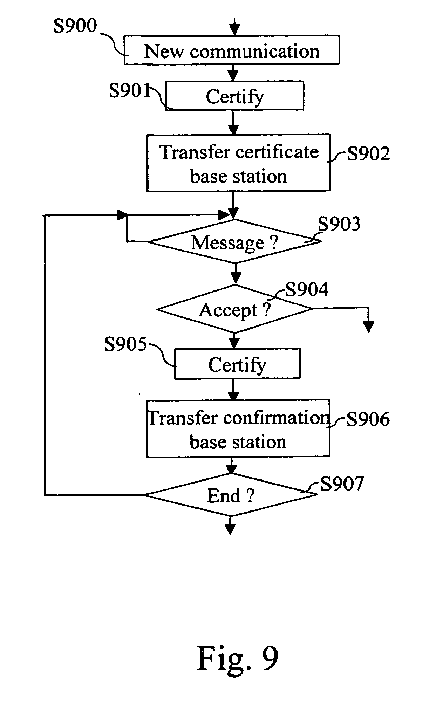

**Fig. 9** is an algorithm executed by a server according to the fourth mode of realization of the present invention.

At step S900, the processor 200 of the server 20 receives a message from a base station 10. Such message is as the one disclosed at step S801a of the algorithm of the Fig. 8.

At next step S901, the processor 200 forms a message certifying at least the identifier of the mobile terminal 30 which intends to use the base station 10 for a communication. Such message is preferably a certificate which comprises the unique identifier of the mobile terminal 30, the unique identifier of the base station 10, the unique identifier of the server 20 and a signature made by encoding the above mentioned identifiers by the private key of the server 20.

At next step S902, the processor 200 transfers the message to the base station 10.

At next step S903, the processor 200 detects the reception of a message comprising two certificates through the network interface 206. Such certificates are as the one transferred, according to the variant of realization, by a base station 10 at step S412 of the Fig. 4.

At next step S901, the processor 200 checks if a message is received from a base station 10 which serves the mobile terminal 30 of which the unique identifier was comprised in the message received at step S900. Such message comprises preferably two certificates.

If a message is received, the processor 200 moves to step S904 and check if the message is acceptable.

For that and for each received certificate, the processor 200 decodes the signature with the public key of the mobile terminal 30 which has transferred the certificate and determines if the decoded information are identical to the one comprised in the certificate. If information are different, the message is corrupted, the processor 200 stops the communication. If one of the certificates is not acceptable, the processor 200 stops the present algorithm. If the certificates are acceptable, the processor 200 moves to step S905. The first of the two certificates is either the one transferred by the server 20 at step S902 or a certificate transferred as it has been disclosed at step S818b of the Fig. 8. The second of the two certificates is the last certificate sent by the mobile terminal 30 to the base station 10.

At next step S905, the processor 200 forms a certificate which comprises the unique identifier of the mobile terminal 30, the unique identifier of the server 20, the certified quantity of items, i.e. the information related to items comprised in the last received certificate from the mobile terminal 30 by the base station 10, a timestamp, the identifier of the communication under process and a signature obtained by encoding these information by the private key of the server 20.

At next step S906, the processor 200 transfers a confirmation message to the base station 10. Such confirmation message comprises the certificate formed at step S905.

At next step S907, the processor 200 checks if the message received at step S903 comprises an information representative of an end of communication or of a handover procedure.

If the message comprises an information representative of an end of communication, the processor 200 stops the present algorithm.

If the message comprises an information representative of an end of communication, the processor 200 returns to step S903.

Naturally, many modifications can be made to the embodiments of the invention described above without departing from the scope of the present invention.

In particular, it has been disclosed here that the base station 10 which is currently serving a mobile terminal 30 transfers the information related to items transferred between the mobile terminal 30 and the remote telecommunication device 40 from the beginning of the communication to the base station 10 which is expected to serve the mobile terminal 30 after a handover procedure. The information related to items transferred between the mobile terminal 30 and the remote telecommunication device 40 from the beginning of the communication are in a variant, by example in a variant of the algorithm of the fourth embodiment, transferred by the server 20 of a mobile operator of which, the mobile terminal 30 is client.

**Claims**

1. Method for determining if a handover procedure of a mobile terminal (30) has to be executed from a first base station (10) which serves the mobile terminal to a second base station which is expected to serve the mobile terminal, the mobile terminal being in communication with a telecommunication device through the first base station, **characterized in that**, the second base station executes the handover procedure (S420) if the second base station receives (S419) information related to items transferred from the beginning of the communication between the mobile terminal and the telecommunication device, the information related to items transferred from the beginning of the communication between the mobile terminal and the telecommunication device are the time elapsed between the first transferred item and the last transferred item and/or the quantity of items transferred from the beginning of the communication and/or the type of items transferred from the beginning of the communication.

2. Method according to claim 1, **characterised in that** the second base station rejects the handover procedure (S423) if no information related to items transferred from the beginning of the communication between the mobile terminal and the telecommunication device are received by the second base station.

3. Method according to claim 1 or 2, **characterized in that** the information related to items transferred between the mobile terminal and the telecommunication device are obtained (S402) by the first base station from the mobile terminal and are transferred by the first base station which serves the mobile terminal to the second base station.

4. Method according to claim 3, **characterized in that** the second base station further receives (S402) after the handover procedure, from the mobile terminal, the information related to items transferred from the beginning of the communication between the mobile terminal and the telecommunication device.

5. Method according to any of the claims 1 to 4, **characterised in that** the information related to items transferred between the mobile terminal and the telecommunication device are comprised in a. certificate, the certificate further comprises the unique identifier of the mobile terminal, the unique identifier of the server (20) of the mobile operator of which the mobile terminal is client, a timestamp, an identifier of the communication under process and a signature obtained by encoding the information related to items, the identifiers, the timestamp by the private key of the mobile terminal or by the private key of the server of the mobile operator of which the mobile terminal is client.

6. Method according to claim 5, **characterised in that** when the second base station stops (S408) to serve the mobile terminal, the second base station transfers (S410) to the server of the mobile operator of which the mobile terminal

is client, a message comprising at least the last received certificate from the mobile terminal.

7. Method for transferring information for a handover procedure of a mobile terminal (30) from a first base station (10) which serves the mobile terminal to a second base station which is expected to serve the mobile terminal, the mobile terminal being in communication with a telecommunication device through the first base station, **characterized in that**, prior to the handover procedure, the first base station transfers (S412) to the second base station information related to items transferred from the beginning of the communication between the mobile terminal and the telecommunication device, the information related to items transferred from the beginning of the communication between the mobile terminal and the telecommunication device are the time elapsed between the first transferred item and the last transferred item and/or the quantity of items transferred from the beginning of the communication and/or the type of items transferred from the beginning of the communication.

8. Method according to claim 7, **characterised in that** the information related to items transferred from the beginning of the communication between the mobile terminal and the telecommunication device are the time elapsed between the first transferred item and the last transferred item and/or the quantity of items transferred from the beginning of the communication and/or the quality of service associated to the items and/or the type of items transferred from the beginning of the communication and/or the quantity of items that have not been transferred from the beginning of the communication.

9. Method according to claim 8, **characterised in that** the first base station receives prior to the handover procedure, certificates from the mobile terminal, each certificate received from the mobile terminal comprising at least information related to items transferred from the beginning of the communication between the mobile terminal and the telecommunication device, the unique identifier of the mobile terminal, the unique identifier of the server of the mobile operator of which the mobile terminal is client, an identifier of the communication under process and a signature obtained by encoding at least the information related to items and the identifiers by the private key of the mobile terminal and the information related to items transferred to the second base station are the last received certificate from the mobile terminal.

10. Method according to claim 9, **characterised in that** when the first base station stops to serve the mobile terminal, the base station transfers to the server of the mobile operator of which the mobile terminal is client, a message comprising at least the last received certificate from the mobile terminal or the first and last received certificate from the mobile terminal.

11. Method according to claim 10, **characterised in that** the first base station receives, in response to the message transferred to the server, a certificate from the server comprising a certified quantity of items, the unique identifier of the server, an identifier of the communication under process and a signature obtained by encoding at least the calculated items and the identifiers by the private key of the server, the certified quantity of items being the quantity of items transferred between the mobile terminal and the telecommunication device through the first base station.

12. Method according to claim 11, **characterised in that** the certified quantity of items is calculated from information related to items comprised in the first received and the last received certificates transferred to the server or from information related to items comprised in the last received certificates transferred to the server and information related to items comprised in a last received certificates transferred to the server by another base station which was previously serving the mobile terminal.

13. Method according to claim 9, **characterised in that** the first base station receives, in response to the information items transferred to the second base station, a certificate from the second base station, the certificate comprising at least the information related to items, the unique identifier of the second base station, an identifier of the communication under process and a signature obtained by encoding at least the information related to items and the identifiers by the private key of the second base station.

14. Method according to claim 13, **characterised in that** the first base station transfers to the server of the mobile operator of which the mobile terminal is client, the certificate received from the second base station.

15. Method according to claim 7, **characterised in that** the first base station receives from a server of a mobile operator of which the mobile terminal is client a certificate authenticating the mobile terminal.

16. Device for determining if a handover procedure of a mobile terminal (30) has to be executed from a first base station (10) which serves the mobile terminal (30) to a second base station which is expected to serve the mobile terminal (30), the mobile terminal (30) being in communication with a telecommunication device through the first base station, **characterized in that**, the device is comprised in the second base station and comprises means for receiving information related to items transferred from the beginning of the communication between the mobile terminal (30) and the telecommunication device and means for deciding if the handover procedure has to be executed according to the information related to items, the information related to items transferred from the beginning of the communication between the mobile terminal (30) and the telecommunication device are the time elapsed between the first transferred item and the last transferred item and/or the quantity of items transferred from the beginning of the communication and/or the type of items transferred from the beginning of the communication.

17. Device for transferring information for a handover procedure of a mobile terminal (30) from a first base station (10) which serves the mobile terminal (30) to a second base station which is expected to serve the mobile terminal (30), the mobile terminal (30) being in communication with a telecommunication device through the first base station, **characterized in that**, the device is comprised in the first base station and comprises means for transferring to the second base station, prior to the handover procedure, information related to items transferred from the beginning of the communication between the mobile terminal and the telecommunication device, the information related to items transferred from the beginning of the communication between the mobile terminal (30) and the telecommunication device are the time elapsed between the first transferred item and the last transferred item and/or the quantity of items transferred from the beginning of the communication and/or the type of items transferred from the beginning of the communication.

18. Computer program which can be directly loadable into a programmable device, comprising instructions or portions of code for implementing the steps of the method according to claims 1 to 6, when said computer program is executed on a programmable device.

19. Computer program which can be directly loadable into a programmable device, comprising instructions or portions of code for implementing the steps of the method according to claims 7 to 15, when said computer program is executed on a programmable device.

20. Signal transferred from a first base station and a second base station, the first base station serving a mobile terminal, the second base station being expected to serve the mobile terminal, the mobile terminal being in communication with a telecommunication device through the first base station, **characterized in that**, the signal comprises information related to items transferred from the beginning of the communication between the mobile terminal and the telecommunication device, the information related to items transferred from the beginning of the communication between the mobile terminal and the telecommunication device are the time elapsed between the first transferred item and the last transferred item and/or the quantity of items transferred from the beginning of the communication and/or the type of items transferred from the beginning of the communication.

**Patentansprüche**

1. Verfahren zum Bestimmen, ob eine Übergabeprozedur eines mobilen Endgeräts (30) von einer ersten Basisstation (10), die das mobile Endgerät bedient, zu einer zweiten Basisstation, von der erwartet wird, dass sie das mobile Endgerät bedient, auszuführen ist, wobei das mobile Endgerät über die erste Basisstation in Kommunikation mit einer Telekommunikationsvorrichtung ist, **dadurch gekennzeichnet, dass** die zweite Basisstation die Übergabeprozedur (S420) ausführt, wenn die zweite Basisstation Information in Bezug auf seit dem Beginn der Kommunikation zwischen dem mobilen Endgerät und der Telekommunikationsvorrichtung transferierte Elemente empfängt (S419), welche Information in Bezug auf seit dem Beginn der Kommunikation zwischen dem mobilen Endgerät und der Telekommunikationsvorrichtung transferierte Elemente die Zeit, die zwischen dem ersten transferierten Element und dem letzten transferierten Element verstrichen ist, und/oder die Menge von seit dem Beginn der Kommunikation transferierten Elementen und/oder der Typ von seit dem Beginn der Kommunikation transferierte Elementen ist.

2. Verfahren nach Anspruch 1, **dadurch gekennzeichnet, dass** die zweite Basisstation die Übergabeprozedur (S423) zurückweist, wenn keine Information in Bezug auf seit dem Beginn der Kommunikation zwischen dem mobilen Endgerät und der Telekommunikationsvorrichtung transferierte Elemente durch die zweite Basisstation empfangen wird.

3. Verfahren nach Anspruch 1 oder 2, **dadurch gekennzeichnet, dass** die Information in Bezug auf seit dem Beginn der Kommunikation zwischen dem mobilen Endgerät und der Telekommunikationsvorrichtung transferierte Elemente durch die erste Basisstation von dem mobilen Endgerät erhalten wird (S402) und durch die erste Basisstation, die das mobile Endgerät bedient, zu der zweiten Basisstation transferiert wird.

4. Verfahren nach Anspruch 3, **dadurch gekennzeichnet, dass** das die zweite Basisstation nach der Übergabeprozedur von dem mobilen Endgerät weiterhin Information in Bezug auf seit dem Beginn der Kommunikation zwischen dem mobilen Endgerät und der Telekommunikationsvorrichtung transferierte Elemente empfängt (S402).

5. Verfahren nach den Ansprüchen 1 bis 4, **dadurch gekennzeichnet, dass** die Information in Bezug auf seit dem Beginn der Kommunikation zwischen dem mobilen Endgerät und der Telekommunikationsvorrichtung transferierte Elemente in einem Zertifikat umfasst ist, wobei das Zertifikat weiterhin einen eindeutigen Identifizierer des mobilen Endgeräts, den eindeutigen Identifizierer des Servers (20) des Mobilfunkbetreibers, von welchem das mobile Endgerät Kunde ist, einen Zeitstempel, einen Identifizierer der laufenden Kommunikation und eine durch Codieren der Information in Bezug auf Elemente, der Identifizierer, des Zeitstempels durch den privaten Schlüssel des mobilen Endgeräts oder durch den privaten Schlüssel des Servers des Mobilfunkbetreibers, von welchem das mobile Endgerät Kunde ist, erhaltene Signatur umfasst.

6. Verfahren nach Anspruch 5, **dadurch gekennzeichnet, dass** dann, wenn die zweite Basisstation damit aufhört (S408), das mobile Endgerät zu bedienen, die zweite Basisstation eine Nachricht mit wenigstens dem letzten empfangenen Zertifikat von dem mobilen Endgerät zu dem Server des Mobilfunkbetreibers, von welchem das mobile Endgerät Kunde ist, transferiert (S41 0).

7. Verfahren zum Transferieren von Information für eine Übergabeprozedur eines mobilen Endgeräts (30) von einer ersten Basisstation (10), die das mobile Endgerät bedient, zu einer zweiten Basisstation, von der erwartet wird, dass sie das mobile Endgerät bedient, wobei das mobile Endgerät über die erste Basisstation in Kommunikation mit einer Telekommunikationsvorrichtung ist, **dadurch gekennzeichnet, dass** die erste Basisstation vor der Übergabeprozedur Information in Bezug auf seit dem Beginn der Kommunikation zwischen dem mobilen Endgerät und der Telekommunikationsvorrichtung transferierte Elemente zu der zweiten Basisstation transferiert (S412), welche Information in Bezug auf seit dem Beginn der Kommunikation zwischen dem mobilen Endgerät und der Telekommunikationsvorrichtung transferierte Elemente die Zeit, die zwischen dem ersten transferierten Element und dem letzten transferierten Element verstrichen ist, und/oder die Menge von seit dem Beginn der Kommunikation transferierten Elementen und/oder der Typ von seit dem Beginn der Kommunikation transferierte Elementen ist.

8. Verfahren nach Anspruch 7, **dadurch gekennzeichnet, dass** die Information in Bezug auf seit dem Beginn der Kommunikation zwischen dem mobilen Endgerät und der Telekommunikationsvorrichtung transferierte Elemente die Zeit, die zwischen dem ersten transferierten Element und dem letzten transferierten Element verstrichen ist, und/oder die Menge von seit dem Beginn der Kommunikation transferierten Elementen und/oder die zu den Elementen gehörende Dienstqualität und/oder der Typ von seit dem Beginn der Kommunikation transferierten Elementen und/oder die Menge von Elementen, die seit Beginn der Kommunikation nicht transferiert worden sind, ist.

9. Verfahren nach Anspruch 8, **dadurch gekennzeichnet, dass** die erste Basisstation vor der Übergabeprozedur Zertifikate von dem mobilen Endgerät empfängt, wobei jedes von dem mobilen Endgerät empfangene Zertifikat wenigstens Information in Bezug auf seit dem Beginn der Kommunikation zwischen dem mobilen Endgerät und der Telekommunikationsvorrichtung transferierte Elemente, den eindeutigen Identifizierer des mobilen Endgeräts, den eindeutigen Identifizierer des Servers des Mobilfunkbetreibers, von welchem das mobile Endgerät Kunde ist, einen Identifizierer der laufenden Kommunikation und eine durch Codieren wenigstens der Information in Bezug auf Elemente und der Identifizierer durch den privaten Schlüssel des mobilen Endgeräts erhaltene Signatur umfasst und die Information in Bezug auf zu der zweiten Basisstation transferierte Elemente das letzte empfangene Zertifikat von dem mobilen Endgerät ist.

10. Verfahren nach Anspruch 9, **dadurch gekennzeichnet, dass** dann, wenn die erste Basisstation damit aufhört, das mobile Endgerät zu bedienen, die Basisstation eine Nachricht mit wenigstens dem letzten empfangenen Zertifikat von dem mobilen Endgerät oder das erste und das letzte empfangene Zertifikat von dem mobilen Endgerät zu dem Server des Mobilfunkbetreibers, von welchem das mobile Endgerät Kunde ist, transferiert.

11. Verfahren nach Anspruch 10, **dadurch gekennzeichnet, dass** die erste Basisstation in Reaktion auf die zu dem Server transferierte Nachricht ein Zertifikat von dem Server mit einer zertifizierten Menge von Elementen, dem eindeutigen Identifizierer des Servers, einem Identifizierer der laufenden Kommunikation und einer durch Codieren wenigstens der berechneten Elemente und der Identifizierer durch den privaten Schlüssel des Servers erhaltenen Signatur empfängt, wobei die zertifizierte Menge von Elementen die Menge von über die erste Basisstation zwischen dem mobilen Endgerät und der Telekommunikationsvorrichtung transferierten Elementen ist.

12. Verfahren nach Anspruch 11, **dadurch gekennzeichnet, dass** die zertifizierte Menge von Elementen aus Information in Bezug auf Elemente berechnet wird, die in den ersten empfangenen und den letzten empfangenen Zertifikaten umfasst sind, die zu dem Server transferiert sind, oder aus Information in Bezug auf Elemente, die in den letzten empfangenen Zertifikaten umfasst sind, die zu dem Server transferiert sind, und Information in Bezug auf Elemente, die in letzten empfangenen Zertifikaten umfasst sind, die zu dem Server durch eine andere Basisstation transferiert sind, die das mobile Endgerät zuvor bediente.

13. Verfahren nach Anspruch 9, **dadurch gekennzeichnet, dass** die erste Basisstation in Reaktion auf die zu der zweiten Basisstation transferierten Informationselemente ein Zertifikat von der zweiten Basisstation empfängt, wobei das Zertifikat wenigstens die Information in Bezug auf Elemente, den eindeutigen Identifizierer der zweiten Basisstation, einen Identifizierer der laufenden Kommunikation und eine durch Codieren wenigstens der Information in Bezug auf Elemente und der Identifizierer durch den privaten Schlüssel der zweiten Basisstation erhaltene Signatur umfasst.

14. Verfahren nach Anspruch 13, **dadurch gekennzeichnet, dass** die erste Basisstation das von der zweiten Basisstation empfangene Zertifikat zu dem Server des Mobilfunkbetreibers, von welchem das mobile Endgerät Kunde ist, transferiert.

15. Verfahren nach Anspruch 7, **dadurch gekennzeichnet, dass** die erste Basisstation von einem Server des Mobilfunkbetreibers, von welchem das mobile Endgerät Kunde ist, ein Zertifikat empfängt, das das mobile Endgerät authentifiziert.

16. Vorrichtung zum Bestimmen, ob eine Übergabeprozedur eines mobilen Endgeräts (30) von einer ersten Basisstation (10), die das mobile Endgerät (30) bedient, zu einer zweiten Basisstation, von der erwartet wird, dass sie das mobile Endgerät (30) bedient, auszuführen ist, wobei das mobile Endgerät (30) über die erste Basisstation in Kommunikation mit einer Telekommunikationsvorrichtung ist, **dadurch gekennzeichnet, dass** Vorrichtung in der zweiten Basisstation umfasst ist und Mittel zum Empfangen von Information in Bezug auf seit dem Beginn der Kommunikation zwischen dem mobilen Endgerät (30) und der Telekommunikationsvorrichtung transferierte Elemente und Mittel zum Entscheiden, ob die Übergabeprozedur auszuführen ist, gemäß der Information in Bezug auf Elemente umfasst, welche Information in Bezug auf seit dem Beginn der Kommunikation zwischen dem mobilen Endgerät (30) und der Telekommunikationsvorrichtung transferierte Elemente die Zeit, die zwischen dem ersten transferierten Element und dem letzten transferierten Element verstrichen ist, und/oder die Menge von seit dem Beginn der Kommunikation transferierten Elementen und/oder der Typ von seit dem Beginn der Kommunikation transferierte Elementen ist.

17. Vorrichtung zum Transferieren von Information für eine Übergabeprozedur eines mobilen Endgeräts (30) von einer ersten Basisstation (10), die das mobile Endgerät (30) bedient, zu einer zweiten Basisstation, von der erwartet wird, dass sie das mobile Endgerät (30) bedient, wobei das mobile Endgerät (30) über die erste Basisstation in Kommunikation mit einer Telekommunikationsvorrichtung ist, **dadurch gekennzeichnet, dass** die Vorrichtung in der ersten Basisstation umfasst ist und Mittel zum Transferieren von Information in Bezug auf seit dem Beginn der Kommunikation zwischen dem mobilen Endgerät und der Telekommunikationsvorrichtung transferierte Elemente zu der zweiten Basisstation vor der Übergabeprozedur umfasst, welche Information in Bezug auf seit dem Beginn der Kommunikation zwischen dem mobilen Endgerät (30) und der Telekommunikationsvorrichtung transferierte Elemente die Zeit, die zwischen dem ersten transferierten Element und dem letzten transferierten Element verstrichen ist, und/oder die Menge von seit dem Beginn der Kommunikation transferierten Elementen und/oder der Typ von seit dem Beginn der Kommunikation transferierte Elementen ist.

18. Computerprogramm, das direkt in eine programmierbare Vorrichtung ladbar sein kann, mit Anweisungen oder Teilbereichen eines Codes zum Implementieren der Schritte des Verfahrens nach den Ansprüchen 1 bis 6, wenn das Computerprogramm auf einer programmierbaren Vorrichtung ausgeführt wird.

19. Computerprogramm, das direkt in eine programmierbare Vorrichtung ladbar sein kann, mit Anweisungen oder Teilbereichen eines Codes zum Implementieren der Schritte des Verfahrens nach den Ansprüchen 7 bis 15, wenn das Computerprogramm auf einer programmierbaren Vorrichtung ausgeführt wird.

20. Von einer ersten Basisstation und einer zweiten Basisstation transferiertes Signal, wobei die erste Basisstation ein mobiles Endgerät bedient, wobei von der zweiten Basisstation erwartet wird, dass sie das mobiles Endgerät bedient, wobei das mobiles Endgerät über die erste Basisstation in Kommunikation mit einer Telekommunikationsvorrichtung ist, **dadurch gekennzeichnet, dass** das Signal Information in Bezug auf seit dem Beginn der Kommunikation zwischen dem mobilen Endgerät und der Telekommunikationsvorrichtung transferierte Elemente aufweist, welche Information in Bezug auf seit dem Beginn der Kommunikation zwischen dem mobilen Endgerät und der Telekommunikationsvorrichtung transferierte Elemente die Zeit, die zwischen dem ersten transferierten Element und dem letzten transferierten Element verstrichen ist, und/oder die Menge von seit dem Beginn der Kommunikation transferierten Elementen und/oder der Typ von seit dem Beginn der Kommunikation transferierte Elementen ist.

**Revendications**

1. Méthode pour déterminer si une procédure de transfert d'un terminal mobile (30) doit être exécutée d'une première station de base (10) qui sert le terminal mobile vers une seconde station de base dont on s'attend à ce qu'elle serve le terminal mobile, le terminal mobile étant en communication avec un dispositif de télécommunication par l'intermédiaire de la première station de base, **caractérisée en ce que** la seconde station de base exécute la procédure de transfert (S420) si la seconde station de base reçoit (S419) des informations relatives aux éléments transférés depuis le début de la communication entre le terminal mobile et le dispositif de télécommunication, les informations relatives aux éléments transférés depuis le début de la communication entre le terminal mobile et le dispositif de télécommunication étant le temps écoulé entre le premier élément transféré et le dernier élément transféré et/ou la quantité d'éléments transférés depuis le début de la communication et/ou le type d'éléments transférés depuis le début de la communication.

2. Méthode selon la revendication 1, **caractérisée en ce que** la seconde station de base rejette la procédure de transfert (S423) si des informations relatives aux éléments transférés depuis le début de la communication entre le terminal mobile et le dispositif de télécommunication ne sont pas reçues par la seconde station de base.

3. Méthode selon la revendication 1 ou 2, **caractérisée en ce que** les informations relatives aux éléments transférés entre le terminal mobile et le dispositif de télécommunication sont obtenues (S402) par la première station de base du terminal mobile et sont transférées par la première station de base qui sert le terminal mobile à la seconde station de base.

4. Méthode selon la revendication 3, **caractérisée en ce que** la seconde station de base reçoit (S402) en outre après la procédure de transfert, du terminal mobile, les informations relatives aux éléments transférés depuis le début de la communication entre le terminal mobile et le dispositif de télécommunication.

5. Méthode selon l'une quelconque des revendications 1 à 4, **caractérisée en ce que** les informations relatives aux éléments transférés entre le terminal mobile et le dispositif de télécommunication sont comprises dans un certificat, le certificat comprenant en outre l'identifiant unique du terminal mobile, l'identifiant unique d'un serveur (20) de l'opérateur de mobiles auquel le terminal mobile est client, un horodatage, un identifiant de la communication en cours et une signature obtenue en encodant les informations relatives aux éléments, les identifiants, l'horodatage par la clé privée du terminal mobile ou par la clé privée du serveur de l'opérateur de mobiles auquel le terminal mobile est client.

6. Méthode selon la revendication 5, **caractérisée en ce que** lorsque la seconde station de base arrête (S408) de servir le terminal mobile, la seconde station de base transfère (S410) au serveur de l'opérateur de mobiles auquel le terminal mobile est client, un message comprenant au moins le dernier certificat reçu du terminal mobile.

7. Méthode pour transférer des informations pour une procédure de transfert d'un terminal mobile (30) d'une première station de base (10) qui sert le terminal mobile vers une seconde station de base dont on s'attend à ce qu'elle serve le terminal mobile, le terminal mobile étant en communication avec un dispositif de télécommunication par l'intermédiaire de la première station de base, **caractérisée en ce que** avant la procédure de transfert, la première station de base transfère (S412) à la seconde station de base des informations relatives aux éléments transférés depuis le début de la communication entre le terminal mobile et le dispositif de télécommunication, les informations relatives aux éléments transférés depuis le début de la communication entre le terminal mobile et le dispositif de télécommunication étant le temps écoulé entre le premier élément transféré et le dernier élément transféré et/ou la quantité d'éléments transférés depuis le début de la communication et/ou le type d'éléments transférés depuis le début de la communication.

8.  Méthode selon la revendication 7, **caractérisée en ce que** les informations relatives aux éléments transférés depuis le début de la communication entre le terminal mobile et le dispositif de télécommunication sont le temps écoulé entre le premier élément transféré et le dernier élément transféré et/ou la quantité d'éléments transférés depuis le début de la communication et/ou la qualité de service associée aux éléments et/ou le type d'éléments transférés depuis le début de la communication et/ou la quantité d'éléments qui n'ont pas été transférés depuis le début de la communication.

9.  Méthode selon la revendication 8, **caractérisée en ce que** la première station de base reçoit avant la procédure de transfert des certificats du terminal mobile, chaque certificat reçu du terminal mobile comprenant au moins les informations relatives aux éléments transférés entre le terminal mobile et le dispositif de télécommunication, l'identifiant unique du terminal mobile, l'identifiant unique d'un serveur de l'opérateur de mobiles auquel le terminal mobile est client, un identifiant de la communication en cours et une signature obtenue en encodant au moins les informations relatives aux éléments, les identifiants par la clé privée du terminal mobile et les informations transférées à la seconde station de base sont le dernier certificat reçu du terminal mobile.

10. Méthode selon la revendication 9, **caractérisée en ce que** lorsque la première station de base arrête de servir le terminal mobile, la première station de base transfère au serveur de l'opérateur de mobiles auquel le terminal mobile est client, un message comprenant au moins le dernier certificat reçu du terminal mobile ou le premier et le dernier certificats reçus du terminal mobile.

11. Méthode selon la revendication 10, **caractérisée en ce que** la première station de base reçoit, en réponse au message transféré au serveur, un certificat du serveur comprenant une quantité d'éléments certifiés, l'identifiant unique du serveur, un identifiant de la communication en cours et une signature obtenue en encodant au moins les éléments calculés et les identifiants par la clé privée du serveur, la quantité d'éléments certifiés étant la quantité d'éléments transférés entre le terminal mobile et le dispositif de télécommunication par l'intermédiaire de la première station de base.

12. Méthode selon la revendication 11, **caractérisée en ce que** la quantité d'éléments certifiés est calculée à partir des informations relatives aux éléments compris dans le premier et le dernier certificats reçus et transférés au serveur ou à partir des informations relatives aux éléments compris dans le dernier certificat reçu et transféré au serveur et des informations relatives aux éléments compris dans le dernier certificat reçu et transféré au serveur par une autre station de base qui a servi précédemment le terminal mobile.

13. Méthode selon la revendication 9, **caractérisée en ce que** la première station de base reçoit, en réponse aux informations transférées à la seconde station de base, un certificat de la seconde station de base, le certificat comprenant au moins les informations relatives aux éléments, l'identifiant unique de la seconde station de base, un identifiant de la communication en cours et une signature obtenue en encodant au moins les informations relatives aux éléments et les identifiants par la clé privée de la seconde station de base.

14. Méthode selon la revendication 13, **caractérisée en ce que** la première station de base transfère au serveur de l'opérateur de mobiles auquel le terminal mobile est client, le certificat reçu de la seconde station de base.

15. Méthode selon la revendication 17, **caractérisée en ce que** la première station de base reçoit d'un serveur de l'opérateur de mobiles auquel le terminal mobile est client, un certificat authentifiant le terminal mobile.

16. Dispositif pour déterminer si une procédure de transfert d'un terminal mobile (30) doit être exécutée d'une première station de base (10) qui sert le terminal mobile (30) vers une seconde station de base dont on s'attend à ce qu'elle serve le terminal mobile (30), le terminal mobile (30) étant en communication avec un dispositif de télécommunication par l'intermédiaire de la première station de base, **caractérisé en ce que** le dispositif est inclus dans la seconde station de base et comporte des moyens pour recevoir des informations relatives aux éléments transférés depuis le début de la communication entre le terminal mobile (30) et le dispositif de télécommunication et des moyens pour décider si le transfert doit être exécuté en fonction des informations relatives aux éléments, les informations relatives aux éléments transférés depuis le début de la communication entre le terminal mobile (30) et le dispositif de télécommunication étant le temps écoulé entre le premier élément transféré et le dernier élément transféré et/ou la quantité d'éléments transférés depuis le début de la communication et/ou le type d'éléments transférés depuis le début de la communication.

**17.** Dispositif pour transférer des informations pour une procédure de transfert d'un terminal mobile (30) d'une première station de base (10) qui sert le terminal mobile (30) vers une seconde station de base dont on s'attend à ce qu'elle serve le terminal mobile (30), le terminal mobile (30) étant en communication avec un dispositif de télécommunication par l'intermédiaire de la première station de base, **caractérisé en ce que** le dispositif est inclus dans la première station de base et comporte des moyens pour transférer à la seconde station de base, avant la procédure de transfert, des informations relatives aux éléments transférés depuis le début de la communication entre le terminal mobile et le dispositif de télécommunication, les informations relatives aux éléments transférés depuis le début de la communication entre le terminal mobile (30) et le dispositif de télécommunication étant le temps écoulé entre le premier élément transféré et le dernier élément transféré et/ou la quantité d'éléments transférés depuis le début de la communication et/ou le type d'éléments transférés depuis le début de la communication.

**18.** Programme d'ordinateur qui peut être chargé directement dans un dispositif programmable, comportant des instructions ou des portions de code pour implémenter les étapes de la méthode selon les revendications 1 à 6, quand ledit programme d'ordinateur est exécuté par un dispositif programmable.

**19.** Programme d'ordinateur qui peut être chargé directement dans un dispositif programmable, comportant des instructions ou des portions de code pour implémenter les étapes de la méthode selon les revendications 7 à 15, quand ledit programme d'ordinateur est exécuté par un dispositif programmable.

**20.** Signal transféré d'une première station de base vers une seconde station de base, la première station de base servant un terminal mobile, la seconde station de base étant attendue pour servir le terminal mobile, le terminal mobile (30) étant en communication avec un dispositif de télécommunication par l'intermédiaire de la première station de base, **caractérisé en ce que** le signal comporte des informations relatives aux éléments transférés depuis le début de la communication entre le terminal mobile et le dispositif de télécommunication, les informations relatives aux éléments transférés depuis le début de la communication entre le terminal mobile et le dispositif de télécommunication étant le temps écoulé entre le premier élément transféré et le dernier élément transféré et/ou la quantité d'éléments transférés depuis le début de la communication et/ou le type d'éléments transférés depuis le début de la communication.

20a — Server

20b — Server

10c — Base station

15c — Cell

50

Telecommunication Network

10d — Base station

15d — Cell

30d

10a — Base station

15a — Cell

30a

10b — Base station

15b — Cell

40

Fig. 1

20

200 — Processor | DB | 204

203 — RAM | Network I/F | 206

201

202 — ROM

## Fig. 2

10

300 — Processor | Network I/F | 304

303 — RAM | Wireless I/F | 306

301

302 — ROM

## Fig. 3

S400

New/handover?

S401 — Communication

S419 — Certificate ?

S402 — Certificate ?

S420 — OK ?

S403 — Timer expires ?

S405 — Accept ?

S404 — Stop

S406 — Memorize

S421 — Memorize

S422 — Handover

S430 — Certificate?

To S409

S407 — Handover?

S408 — End ?

S409 — Read certificate(s)

S411 — Read certificate(s)

S423 — Reject handover

S410 — Transfer certificate(s) server

S412 — Transfer certificate base station

S413 — Transfer certificate(s) server

S414 — Confirmation ?

S417 — Accept ?

S415 — Delay expires ?

S418 — Memorize

S416 — Mobile Operator NG

## Fig. 4

S500 → Receive message

S501 — Accept ?

S502 — Hov =0
Cert(0,s)=0
I=1

S503 — End ?

S504 — Hov=1

S505 — Memorize Cert(I,s) base station

S506 — I=I+1

S507 — Message ?

S508 — Accept ?

S509 — Memorize Cert(I,s) base station

S510 — Hov=1 ?

S511 — Confirm base station CF(1)

S512 — J=1

S513 — Calculate CF(J)

S514 — Confirm base station CF(J)

S515 — J=I ?

S516 — J=J+1

Fig. 5

S600 — Receive message

S601 — Accept ?

S602 — Conf =0
Cert(0,s)=0
I=1

S603 — End ?

S604 — Conf=1 ?

S609 — Memorize Cert(I,s) base station

S610 — Calculate CF(I-1)

S611 — Confirm base station CF(I-1)

S612 — I=I+1

S605 — Conf=1

S606 — Memorize Cert(I,s) base station

S607 — I=I+1

S613 — Memorize Cert(I,s) base station

S614 — Conf=1 ?

S615 — Calculate CF(I-1)

S616 — Confirm base station CF(I-1)

S617 — Calculate CF(I)

S618 — Confirm base station CF(I)

S608 — Message ?

S609 — Accept ?

S614

## Fig. 6

S700

New/handover?

S701

Communication

S702

Certificate ?

S703

Timer
expires ?

S705

Accept ?

S704

Stop

S706

Memorize

S730

Certificate?

S707

Handover?

To S709

S708

End ?

S711

Read certificates

S709

Read certificates

S712

Transfer certificate
base station

S710

Transfer certificates
server

S713a

Certificate
base station?

S713b

Transfer certificates
server

S714

Confirmation ?

S717a

S715

Delay
expires ?

S718

OK ?

Memorize

S716a

Mobile
Operator NG

S710

Certificate ?

S720

OK ?

S721a

Certify

S721b

Transfer

S721c

Memorize

S722

Handover

To S702

Reject
handover

S723

Fig. 7

Fig. 8

S900 New communication

S901 Certify

Transfer certificate base station S902

Message ? S903

Accept ? S904

S905 Certify

Transfer confirmation base station S906

End ? S907

# Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003235163 A